# EUROPEAN PATENT APPLICATION

(11) **EP 3 417 718 A1**
(43) Date of publication of application: **26.12.2018**
(21) Application number: 16890415.9
(22) Date of filing: 17.02.2016
(51) Int. Cl.: A23J 1/20

(54) **SYSTEM AND METHOD FOR THE MICROPARTICULATION OF WHEY PROTEIN**

(71) Applicant: Perinox, S.A., 02600 Villarrobledo (Albacete) (ES)
(72) Inventor: TORRES SENABRE, Ivan, 02600 Villarrobledo (albacete) (ES)
(74) Representative: Capitán García, Maria Nuria
(86) International application number: PCT/ES2016/070103
(87) International publication number: WO 2017/140922

(57) **Abstract**

The invention relates to a system and method for the microparticulation of whey protein, without the need for high pressures or high temperatures. The system comprises: a first pipe for conveying the protein, which passes through a pump at the entrance of the system; a thermal sector; a mechanical sector; and a chemical sector disposed after the pump, which comprises a PH corrector dispenser connected to the first pipe. In the method, the chemical treatment for correcting pH is performed at a pH of between 4 and 7.

## Description

### FIELD OF THE INVENTION

The present invention is included in the field of the microparticulation of whey protein.

### BACKGROUND OF THE INVENTION

Whey protein is characterised by a molecular weight, in its various types, lower than 100 KD ("KD" for kilodaltons, also expressed as "kDa"). Therefore, it is small in size and is in soluble state. In order to incorporate this protein in certain food processes, it needs to be denatured it and agglomerated to form particles, usually micron-sized, this being known as microparticulation.

Microparticulation can be defined as the process in which a protein concentrate is subjected to a thermal treatment under conditions of mechanical stress, so that shear forces prevent the formation of a gelled matrix and give rise to the formation of small aggregates of serum proteins. This process does not induce the loss of quality or a reduction of the high biological value of the proteins, in fact, the main objective is to provide new technological and organoleptic properties, while the serum proteins maintain their nutritional value and their functional properties (foaming, emulsifying, gelling capacity). As a result, it can be a very useful ingredient in the formulation of dairy products, such as cheese, yoghurt, ice cream, quark, kefir, beverages, or in sauces, creams and mayonnaise. It could also be used as a source of milk solids to replace milk in the formulation of other products.

As described herein and in standard language used in the prior art of the invention, microparticulation is defined as a process for the treatment of a protein concentrate, however, it does not strictly need to be a concentrate and the process may be performed without concentration, even if the results are not optimal. That is to say, concentration is a requirement for a good result, but it is not essential for microparticulation as such, so the term "concentration" used herein is to be interpreted in a broad sense.

Microparticulation makes it possible to obtain protein aggregates having a particle size of between 0.5 and 10 µm, similar to the size of fatty globules (1-10 pm), enabling their inclusion in protein matrices, thus behaving as a potential substitute of the fatty globules, and may be reintroduced in the milk product. In fact this type of application was traditionally carried out in numerous cheese industries in a more or less artisan fashion for several decades (with the problem posed by the lack of a thorough control of the process and therefore somewhat random results).

In addition to the foregoing, microparticulates have other advantages as compared to liquid whey:
- They do not present the yellowish colour of whey, but rather their white colour is reminiscent of milk.
- They do not taste like "whey"; raw whey is considered to have an unpleasant taste.
- They gave a creamy smooth structure.
- They are characterised by their good water retention capacity.

The known patent with publication number EP2124583 discloses a microparticulation method in which the whey is pre-heated at 75°C, is passed through a pump at high pressure at 40-80bar, it is heated to 85-125°C, maintained for 3 to 30 minutes, cooled to-75°C, passed through a homogeniser, cooled, and thus particles between 3 and 10 micrometers are obtained.

The invention described in said patent has the disadvantages of using high pressure in most of the system, of being above 100°C, considered a high temperature, as well as a relatively long processing time.

Another patent is known with publication number US2010/00472, which describes a much more conventional denaturation process in a heat exchanger, at the time undergoing high pressures, subsequently breaking the aggregates on the head of a homogeniser.

### DESCRIPTION OF THE INVENTION

The present invention is established and characterised in the independent claims, while the dependent claims describe additional characteristics thereof.

The object of the invention is to achieve the microparticulation of whey protein, both by means of a system and the method of use thereof, without needing high pressures in the entire system, or in most of it, or high temperatures, being considered as such, respectively, from 40 bar and 100°C, according to the known prior art. The technical problem to solve is to configure the system by means of elements and their connection between each other, as well as its method of use.

An advantage of the system and the method according to claims 1 and 10 is that it is not merely a physical (mechanical and thermal) process-treatment, but is also chemical, the temperature throughout the system is low and the high pressure only exists at one point of the system. An advantage derived from the above is that the energy consumption is reduced as compared to what is known, being more environment-friendly.

Another advantage of the system according to claim 3 is that it does not exceed 100°C, thus considered as low temperature.

Another advantage of the system according to claim 9 is that thermal treatments are performed in a tubular heat exchanger to maintain an optimal work flow to ensure a denaturation and aggregation that allow for the subsequent breakage of the aggregate protein in a valid manner. Similarly maintenance must be carried out in a tube having a suitable diameter to ensure the work flow.

Other advantages related to the system and the method are:
- by using lower pressure and temperature, equipment is smaller and less expensive, and its use is more economical in terms of energy;
- the product obtained is homogeneous, more than 95% of the particles are the same size;
- a wider range of particle size may be obtained with a single system, unlike other known systems where only a single particle size can be obtained.

### BRIEF DESCRIPTION OF THE DRAWINGS

This specification is supplemented with a set of drawings illustrating the preferred embodiment, which are never intended to limit the invention.

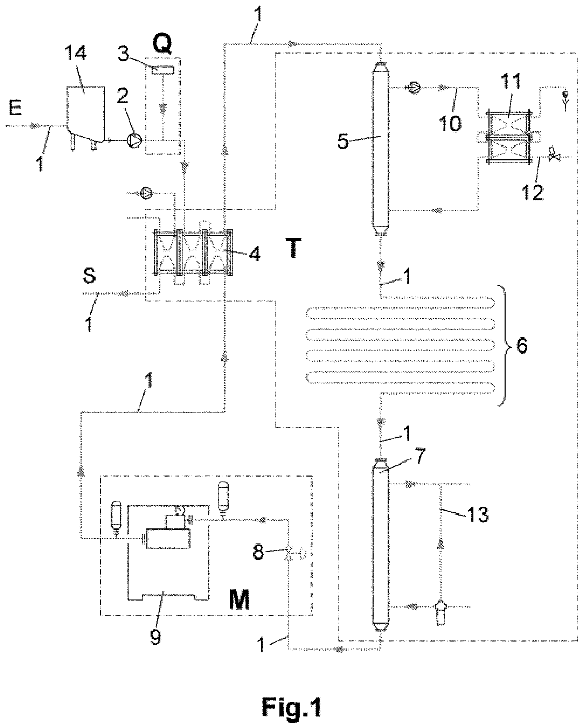

Figure 1 represents a diagram of the system wherein the various sectors are distinguished with dotted and dashed lines.

### DETAILED DESCRIPTION OF THE INVENTION

An embodiment of the invention based on the figure is provided below.

Figure 1 shows a system for the microparticulation of whey protein, which comprises a first pipe (1) for conveying said protein that the entrance (E) of the system passes through a pump (2). It is usual for the protein to have concentrated at the entrance from WPC 14 to WPC 60 (WPC being the initials for "Whey Protein Concentrate"). Optionally a balancing tank (14) is provided before the pump (2).

The system further comprises a thermal sector (T), a mechanical sector (M) and a chemical sector (Q), the latter disposed immediately after the constant flow mono or lobular pump (2), which comprises a pH corrector dispenser (3) connected to the first pipe (1). Typically, pH control is carried out through any standard pH meter, and adjustment (where necessary) is usually carried out by the addition of an acid product (preferably citric acid) by means of a metering pump, not shown. In addition, the entire system is at a temperature equal to or lower than 100°C, the entire system is at a pressure between 2 and 15 bar, except in the mechanical sector (M) only.

Thus, in the method, in addition to a thermal treatment and a mechanical treatment, a chemical treatment is carried out for pH correction to between 4 and 7, all of them at a low temperature, lower than or equal to 100°C, at a pressure of between 2 and 15 bar, although the pressure usually used is between 2 and 4 bar, the mechanical treatment is the only one that is carried out at a pressure above 40 bar, thus being a low pressure method as compared to the methods known in the prior art, that is to say, the agglomeration of particles is carried out at a relatively low pressure.

In the first embodiment described, the pipe (1) enters the thermal sector (M) and passes through a first heat exchanger (4), for heating, preferably a plate heat exchanger as the one shown, although it may be of another type; it continues until reaching a heater (5) of between 75 and 95°C. Heating is normally carried out with 2°C hot water differentials relative to the fluid to be heated, in order to achieve a linear and controllable agglomeration of particles, since the particle size is directly proportional to the temperature: the higher the temperature the larger the size.

The first pipe (1) continues until reaching a maintenance configuration (6), a step in the method which preferably lasts between 5 seconds and 90 seconds, typically less than 15 seconds, a much shorter time than that known in the prior art. The maintenance time affects not only the size and the hardness of the particle: the longer the time, the larger the size and the greater the hardness. Preferably, and as shown in figure 1, the maintenance section is designed as an assembly of parallel straight sections with a circular cross-section, at least two being connected by means of 180°-curves. Instead of this configuration, an alternative is known using a deposit, which is not feasible to maintain an optimal flow as intended in the invention.

Ultimately, denaturation and aggregation of proteins is related to the flow, since if the denatured protein particles are in contact without any movement the aggregation will be easier, and therefore breakage will be less effective. That is why there is an optimal performance ratio especially in the tubular-type heater (5), and in the maintenance configuration (6). The diameter of both affects the size of the agglomerated particles.

The first pipe (1) continues to a cooler (7), continues until entering the mechanical sector (M) comprising a back pressure valve (8), it continues to a homogeniser (9), to break up the particle agglomerates, of between 200 and 250 bar, the only point of the system that is at high pressure, it continues to exit the mechanical sector (M) and to enter the thermal sector (T) reaching the first heat exchanger (4) for cooling the agglomerate with a creamy texture, and therefrom to the system outlet (S), the final temperature to which it cools depending on the end use, is normally about 8°C. Thus a thermal use is achieved, as in the first heat exchanger (4) the hot product leaving the system is used to heat the incoming product going into it that is cold and vice versa, to cool the outgoing product. This aspect helps to reduce the energy consumption of the system.

A result of the combination of the chemical, thermal and mechanical treatments is that the possible bacteriophages contained in whey are deactivated.

Optionally, the heater (5) is a tubular heat exchanger reached by a hot fluid through a second pipe (10) to which it is connected, heated in a second heat exchanger (11), typically a plate heat exchanger as shown, but it may be of another type, which is reached by a hot fluid through a third pipe (12) and the cooler (7) is a tubular or plate heat exchanger reached by a cold fluid through a fourth pipe (13) to which it is connected. The said heating (5) and cooling (7) tubular heat exchangers where appropriate, are simple, not needing to be scraped-surface heat exchangers, which are more economical and do not alter the agglomeration by the rotation of the scrapers.

## Claims

1. System for the microparticulation of whey protein, which comprises a first pipe (1) for conveying said protein that at the entrance (E) of the system passes through a pump (2), further comprising a thermal sector (T) and a mechanical sector (M), **characterised in that** it also comprises a chemical sector (Q) disposed after the pump (2) comprising a pH corrector dispenser (3) connected to the first pipe (1), the entire system being at a temperature equal to or lower than 100°C, the entire system being at a pressure between 2 and 15 bar, except for the mechanical field (M) only.

2. System according to claim 1 wherein the first pipe (1) enters the thermal sector (T) and passes through a first heat exchanger (4) for heating.

3. System according to claim 2 wherein the first pipe (1) continues until a heater (5) of between 75 and 95°C.

4. System according to claim 3 wherein the first pipe (1) continues until a maintenance configuration (6) in which the pipe (1) has a circular cross-section and comprises at least two parallel straight sections connected by a 180°-curve.

5. System according to claim 4 wherein the first pipe (1) continues until reaching a cooler (7).

6. System according to claim 5 wherein the first pipe (1) continues until entering the mechanical sector (M) comprising a back pressure valve (8).

7. System according to claim 6 wherein the first pipe (1) continues until a homogeniser (9) of between 200 and 250 bar.

8. System according to claim 7 wherein the first pipe (1) continues until exiting the mechanical sector (M) and entering in the thermal sector (T) to the first heat exchanger (4) for cooling and therefrom to the system outlet (S).

9. System according to claims 3 and 5 wherein the heater (5) is a tubular heat exchanger to which a second pipe (10) is connected, which passes through a second heat exchanger (11), through which a third pipe (12) also passes, and the cooler (7) is a tubular or plate heat exchanger to which a fourth pipe (13) is connected.

10. Method for the microparticulation of whey protein, comprising a thermal treatment and a mechanical treatment, **characterised in that** it further comprises a chemical treatment for pH correction between 4 and 7, all treatments being carried out at a temperature equal to or lower than 100 ° C, the thermal and chemical treatments being carried out at a pressure of between 2 and 15 bar, the mechanical treatment being the only one that is carried out at a pressure higher than 40 bar.

11. Method according to claim 10, wherein the thermal treatment is carried out at between 75 and 95°C.

12. Method according to either of claims 10 or 11, wherein the mechanical treatment by homogenisation is performed at between 200 and 250 bar.

13. Method according to any of claims 10 to 12 wherein in the mechanical treatment has a maintenance phase of between 5 and 90 seconds.
